# EUROPÄISCHE PATENTSCHRIFT

(11) **EP 3 023 185 B1**
(45) Veröffentlichungstag und Bekanntmachung des Hinweises auf die Patenterteilung: **24.02.2021**
(21) Anmeldenummer: 15195574.7
(22) Anmeldetag: 20.11.2015
(51) Int. Cl.: B23D 61/00, B23D 61/02, B24B 23/04, B24B 45/00

(54) **UM EINE OSZILLATIONS- ODER DREHACHSE DREHANTREIBBARES WERKZEUG MIT EINEM ANTRIEBSPROFIL ZUR KUPPLUNG MIT EINEM ABTRIEBSPROFIL**
DRIVABLE TOOL WHICH CAN BE ROTATED AROUND AN OSCILLATION OR ROTATING AXLE WITH A DRIVE PROFILE FOR COUPLING WITH AN OUTPUT PROFILE
OUTIL ENTRAÎNÉ EN ROTATION AUTOUR D'UN AXE DE ROTATION OU D'OSCILLATION COMPRENANT UN PROFIL D'ENTRAÎNEMENT DESTINÉ A S'ACCOUPLER À UN PROFIL D'ENTRAÎNEMENT

(30) Priorität: 24.11.2014 DE 102014117119; 18.11.2015 DE 102015119962
(43) Veröffentlichungstag der Anmeldung: 25.05.2016
(73) Patentinhaber: Wolfcraft GmbH, 56746 Kempenich (DE)
(72) Erfinder: Noniewicz, Zbigniew, D-56746 Kempenich (DE)
(74) Vertreter: Grundmann, Dirk

(56) Entgegenhaltungen:
- WO-A1-2015/143265
- DE-A1-102004 050 798
- DE-A1-102008 041 425
- DE-A1-102010 039 786
- DE-U1-202011 052 299

## Beschreibung

### Gebiet der Technik

Die Erfindung betrifft ein Werkzeug mit einem Arbeitsabschnitt zum Bearbeiten eines Werkstücks und mit einem davon beabstandeten, von einem gegebenenfalls auch gebogenen Flachstück gebildeten Antriebsabschnitt, der ein Antriebsprofil zur Kupplung mit einem Abtriebsprofil einer Antriebsmaschine aufweist, mit der das Werkzeug insbesondere um eine Achse oszillierend oder drehend bewegt werden kann, wobei der Antriebsabschnitt ein ringsum geschlossenes Fenster und im Bereich des Rahmens des Fensters Formschlusseingriffsöffnungen zum Eingriff von Formschlusseingriffsvorsprüngen des Abtriebsprofils aufweist.

### Stand der Technik

Ein gattungsgemäßes Werkzeug ist beispielsweise aus der DE 20 2010 013 008 U1, DE 20 2011 000 517 U1, DE 20 2011 052 299 U1 oder einer DE 10 2004 050 798 A1 vorbekannt. Die in den genannten Druckschriften beschriebenen Werkzeuge werden von Blechteilen gebildet, welche zwei Endabschnitte besitzen. Die beiden Endabschnitte werden jeweils von Flachstücken ausgebildet. Ein Endabschnitt bildet einen Arbeitsabschnitt, der eine Sägeverzahnung aufweist, mit dem ein Werkstück spanend bearbeitet werden kann.

Der davon beabstandete Endabschnitt des Werkzeuges bildet einen Antriebsabschnitt mit einem ein Fenster aufweisendes Antriebsprofil. Der Rand des Fensters beziehungsweise der das Fenster umgebende Rahmen besitzt Öffnungen zur drehmitnehmenden Kupplung des Antriebsabschnitts an ein Abtriebsprofil einer Antriebsmaschine. Das Abtriebsprofil der Antriebsmaschine wird derart mit dem Antriebsprofil des Werkzeugs gekoppelt, dass durch eine Antriebsbewegung der Antriebsmaschine das Werkzeug bewegt werden kann. Es handelt sich insbesondere um eine oszillierende oder drehende Bewegung der Antriebsachse. Das Fenster ist vom Fensterrahmen rings umschlossen. Zur Kupplung des Antriebsprofils mit dem Abtriebsprofil der Antriebsmaschine wird das Abtriebsprofil in das Fenster hineingesteckt, sodass die Formschlusseingriffsvorsprünge in die Formschlusseingriffsöffnungen hineintreten. Anschließend muss beispielsweise auf einen Gewindeabschnitt des Abtriebsprofils eine Befestigungsmutter aufgeschraubt werden, die den Antriebsabschnitt des Werkzeugs axial an das Abtriebsprofil der Antriebsmaschine kuppelt.

Während die in dem obengenannten Stand der Technik beschriebenen Werkzeuge axial auf das Abtriebsprofil aufgesteckt werden müssen, gibt es auch beispielsweise aus den US 8,523,868 B2 oder US 6,022,353 her bekannte Werkzeuge mit einem von einem Flachstück gebildeten Antriebsabschnitt, bei dem das zum Antriebsprofil gehörende Fenster einen Rahmen besitzt, der eine Öffnung aufweist. Das Abtriebsprofil der Antriebsmaschine beziehungsweise eine Abtriebsachse der Antriebsmaschine kann hier in Radialrichtung in das Fenster hinein verlagert werden. Dies hat den Vorteil, dass eine eventuell vorhandene Befestigungsmutter oder anderweitige Befestigungsmittel zur axialen Fesselung des Werkzeugs an die Antriebsmaschine nicht von der Antriebswelle gelöst werden muss. Aus der DE 20 2011 052 299 U1 ist ein Oszillationssägeblatt bekannt, bei dem ein einen sternförmigen Rand aufweisendes Fenster von U-förmigen Einschnitten umgeben ist. DE 20 2011 052 299 U1 offenbart ein Werkzeug nach dem Oberbegriff des Anspruchs 1. Die WO2015143265 ist nächstliegender Stand der Technik für die abhängigen Ansprüche 12 und 13. Das Prioritätsdatum von 24-11-2014 ist nicht gültig für den Gegenstand der abhängigen Ansprüche 12 und 13.

### Zusammenfassung der Erfindung

Der Erfindung liegt die Aufgabe zur Grunde, ein gattungsgemäßes Werkzeug gebrauchsvorteilhaft weiter zu bilden.

Gelöst wird die Aufgabe durch die Kombination von Merkmalen nach Anspruch 1. Die Unteransprüche stellen vorteilhafte Weiterbildungen dar.

Erfindungsgemäß soll der Rahmen des Fensters Solltrennstellen aufweisen. Diese dienen dem Herausbrechen eines Ausbrechabschnittes aus dem Rahmen. Die Solltrennstellen werden von Stegen ausgebildet. Diese Stege bilden Randkanten aus. Die Randkanten werden zumindest von außen in den Rahmen eingebracht. Die Randkanten können einen Randabschnitt einer Formschlusseingriffsöffnung bilden. Die Randkanten können aber auch von vom Fenster her in den Rahmen eingebrachten Einschnitten gebildet sein. Die Solltrennstellen bilden somit Materialschwachstellen, an denen der Fensterrahmen aufgebrochen werden kann. Der Ausbruchabschnitt kann von zwei oder mehreren Teilabschnitten ausgebildet sein. Die Teilabschnitte sind an Solltrennstellen miteinander verbunden. Das Flachstück, von dem der Fensterrahmen gebildet ist, besteht bevorzugt aus Metall, besonders bevorzugt aus einem bei einer Biegebeaufschlagung brechenden Metall, insbesondere einem Stahl und besonders bevorzugt von einem gehärteten Stahl. Zum Herausbrechen des insbesondere aus mehreren Teilabschnitten bestehenden Ausbrechabschnitts kann ein Werkzeug, beispielsweise eine Zange verwendet werden. Mit dieser Zange wird der Fensterrahmen im Bereich des Ausbrechabschnittes biegebeaufschlagt, sodass es im Bereich des Solltrennstellen zu einem Bruch kommt. Nach dem Herausbrechen des Ausbrechabschnittes verbleibt eine Öffnung, die eine Breite aufweist. Die sich über den Umfangsrichtung des Fensters erstreckende Breite der Öffnung ist bevorzugt größer, als ein minimaler Durchmesser des Fensters und insbesondere ausreichend groß, sodass eine Antriebswelle einer Antriebsmaschine durch die nach außen hin offene Öffnung hindurch gesteckt werden kann, sodass das Werkzeug nicht nur axial auf eine Abtriebswelle einer Antriebsmaschine sondern auch in radial Richtung auf die Abtriebswelle der Antriebsmaschine aufsteckbar ist. Das Werkzeug beziehungsweise der Antriebsabschnitt des Werkzeugs kann eine Mittellinie besitzen. Diese Mittellinie ist bevorzugt eine Symmetrieachse, die durch einen Mittelpunkt des Fensters verläuft. Die durch das Herausbrechen der Ausbrechabschnitte entstandene Öffnung kann symmetrisch bezogen auf die Mittellinie beziehungsweise Symmetrieachse ausgerichtet sein. Die Öffnung kann aber auch asymmetrisch zu dieser Linie, insbesondere Symmetrieachse ausgerichtet sein, sie kann beispielsweise seitlich versetzt dazu liegen. Bei der durch das Herausbrechen der Ausbrechabschnitte entstandenen Öffnung handelt es sich bevorzugt um eine Radialöffnung. Die Öffnung kann aber auch eine fensterartige Aussparung, die insbesondere zwischen den Antriebsabschnitt und dem Abtriebsabschnitt angeordnet ist, mit dem Fenster des Antriebsprofils verbinden. Die fensterartige, bevorzugt rings umschlossene Aussparung besitzt eine größere Freifläche und insbesondere einen größeren minimal Durchmesser als das Fenster des Antriebsprofils, sodass durch diese Aussparung die beispielsweise mit einer Mutter versehene Abtriebswelle der Antriebsmaschine hindurchgesteckt werden kann.

Das erfindungsgemäße Werkzeug besteht im Wesentlichen aus zwei Teilen, die beide von Flachstücken ausgebildet werden. Ein erstes Flachstück bildet den Arbeitsabschnitt aus. Dieser erstreckt sich bevorzugt in einer Ebene und ist mit einer Befestigungsstelle des zweiten Flachstücks verbunden, welches den Antriebsabschnitt ausbildet. Der Antriebsabschnitt wird bevorzugt von einem gebogenen Flachstück ausgebildet. Es kann zwei Biegekanten aufweisen, so dass es im Querschnitt Z-förmig gebogen ist. Die Biegelinien verlaufen parallel zueinander, so dass der Antriebsabschnitt eine Treppenform erhält.

Ein weiterer Aspekt der Erfindung befasst sich mit dem Ausgleichen einer Unwucht eines gattungsgemäßen Werkzeuges. Zur gebrauchsvorteilhaften Weiterbildung des gattungsgemäßen Werkzeugs wird hierzu vorgeschlagen, dass bezogen auf eine durch die Bewegungs- bzw. Drehachse definierten Mittelpunkt des Fensters hindurchgezogenen Mittellinie die der Befestigungsstelle gegenüberliegende Seite des Antriebsabschnittes eine derartige Massenverteilung aufweist, dass der Schwerpunkt des Antriebsabschnitts entweder im Mittelpunkt liegt oder aber bezogen auf die Befestigungsstelle jenseits des Mittelpunktes auf der Mittellinie liegt. Der Versatz des Schwerpunktes in Richtung weg vom Arbeitsabschnitt des Werkzeugs wird bevorzugt durch eine Kompensationsmasse erzielt. Die Kompensationsmasse kann durch einen verbreiterten Abschnitt der Befestigungsstelle gegenüberliegenden Bereich des Flachstücks erzielt werden. Dieser kann eine gerundete Umrisskontur aufweisen. Wird die Befestigungsstelle mit einem Arbeitsabschnitt verbunden, so liegt der Schwerpunkt gegebenenfalls noch in einer exzentrischen Position. Er ist aber in Richtung auf die Achse versetzt. Wird ein so ausgebildeter Antriebsabschnitt, der, wie oben ausgeführt, auch zu einer Treppenform gebogen sein kann, mit seiner Befestigungsstelle mit einem Arbeitsabschnitt verbunden, so erhält die der Ausgleichsmasse gegenüberliegende Seite einen Massenzuwachs. Der Schwerpunkt des gesamten Werkzeuges liegt dann zwischen dem Arbeitsende des Arbeitsabschnitts und dem Mittelpunkt des Fensters.

In einer bevorzugten Ausgestaltung der Erfindung besitzt der Ausbrechabschnitt eine Seite, die zum Fenster weist und die Kontur des Randes des Fensters mitausbildet und eine dieser Seite gegenüberliegende, fensterabgewandte Seite, die die Umrisskontur des Antriebsabschnittes mitbildet. Zwei weitere, sich gegenüberliegende Seiten des Ausbrechabschnittes bilden Befestigungsseiten, mit denen der Ausbrechabschnitt trennbar am Antriebsabschnitt befestigt ist. Die Solltrennstellen werden jeweils von einem Steg gebildet. Die beiden Stege liegen auf einer Tangentiallinie bezogen auf einen Kreis um das Zentrum das Fensters beziehungsweise die Antriebsachse. Die durch die beiden Stege verlaufende Sollbruchlinie schneidet eine durch die Achse verlaufende Radiale etwa in der Mitte zwischen den beiden Stegen, so dass der Ausbrechabschnitt in einfacher Weise durch Angriff der Backen einer Zange durch mehrfaches biegendes Verschwenken um die Sollbruchlinie abgetrennt werden kann. Dies erfolgt durch eine Materialermüdung im Bereich der Solltrennstelle, dort, wo die Stege beim Hin- und Herschwenken verbogen werden. Jede der beiden Befestigungsseiten des Ausbrechabschnittes ist bevorzugt nur mit einem einzigen Steg mit dem Antriebsabschnitt verbunden, wobei die beiden Stege die Sollbruchlinie, die eine Biegelinie ist, definieren. Auch hier bildet der Steg eine radial nach außen weisende Randkante aus, die von einem radial äußeren Einschnitt in den Rahmen des Fensters gebildet ist. Der Steg bildet darüber hinaus eine radial nach innen weisende Randkante aus, die von einem radial inneren Einschnitt in den Rahmen gebildet ist. Der radial innere Einschnitt kann hier von einer Formschlusseingriffsöffnung gebildet sein, die über einen Kanal mit der freien Fläche des Fensters verbunden ist.

### Kurze Beschreibung der Zeichnungen

Ausführungsbeispiele der Erfindung werden nachfolgend anhand beigefügter Zeichnungen erläutert. Es zeigen:
- Fig. 1: in einer Draufsicht ein erstes Ausführungsbeispiel der Erfindung,
- Fig. 2: einen Schnitt gemäß der Linie II-II in Figur 1,
- Fig. 3: den Antriebsabschnitt 2 des in der Figur 1 dargestellten Ausführungsbeispiels nachdem Herausbrechen eines aus zwei Teilabschnitten 16, 17 bestehenden Ausbrechabschnitts, sodass sich eine Öffnung 22 ausbildet,
- Fig. 3a: die herausgebrochenen Teilabschnitte 16, 17,
- Fig. 4: ein zweites Ausführungsbeispiel in einer Darstellung gemäß Figur 1,
- Fig. 5: ein drittes Ausführungsbeispiel in einer Darstellung gemäß Figur 1,
- Fig. 6: ein viertes Ausführungsbeispiel in einer Darstellung gemäß Figur 1,
- Fig. 7: ein fünftes Ausführungsbeispiel in einer Darstellung gemäß Figur 1.

### Beschreibung der Ausführungsformen

Bei den Ausführungsbeispielen handelt es sich um eine Säge, die aus zwei Flachstücken besteht. Ein Flachstück bildet einen Arbeitsabschnitt 1, der an seinem Ende eine verzahnte Kante aufweist. Diese Sägeverzahnung 3 kann gradlinig oder entlang eines Bogens verlaufen. Das Zentrum des Bogens liegt in einem Dreh- oder Oszillationszentrum, um das das Werkzeug drehend oder oszillierend angetrieben wird. Der Arbeitsabschnitt 1 ist mit einem ebenfalls von einem Flachstück gebildeten Antriebsabschnitt 2 verbunden. Der Antriebsabschnitt 2 ist bevorzugt aus einem gehärteten Stahl gefertigt. Er ist beispielsweise über Schweißpunkte, Nieten oder dergleichen mit dem Arbeitsabschnitt 1 verbunden und besitzt einen zum Verbindungsabschnitt mit dem Arbeitsabschnitt 1 höhenversetzten Teilabschnitt, der ein Antriebsprofil 4 aufweist.

Das Antriebsprofil 4 bildet ein eine kreisrunde Umrisskonturlinie aufweisendes Fenster 11 aus. Die Achse 5 des Fensters bildet das Oszillations- oder Drehzentrum. Von der einen minimalen Durchmesser des Fensters definierenden Kreisbogenlinie gehen radial nach außen gerichtete Schlitze ab. Es sind insgesamt vier um 90° gegeneinander versetzt angeordnete Formschlusseingriffsöffnungen 6, 9 vorgesehen. Zwischen den länglichen Formschlusseingriffsöffnungen 6, 9 befinden sich ebenfalls zum Fenster 11 hin offene Formschlusseingriffsöffnungen 8, 8' ferner sind rings umschlossene, von der kreisförmigen minimalen Umrisskonturlinie des Fensters 11 radial nach außen beabstandete Formschlusseingriffsöffnungen 7, 10 vorgesehen die in einem 30° Abstand um das Zentrum 5 versetzt angeordnet sind.

Die unterschiedlichen Formschlusseingriffsöffnungen 6 bis 10 dienen dem Eingriff voneinander verschieden gestalteter Abtriebsprofile von Antriebsmaschinen unterschiedlicher Hersteller.

Das Fenster 11 ist von einem Rahmen 12 rings umschlossen. Der Rahmen besitzt einen inneren von den Formschlusseingriffsöffnungen 6, 8, 8' strukturierten Rand, der auf der das Fenster 11 begrenzenden kreisförmigen Konturlinie verläuft. Im Rahmen 12 sind zudem die fensterartigen Formschlusseingriffsöffnungen 7, 10 angeordnet. Der Rahmen besitzt darüber hinaus einen äußeren Rand, der vom äußeren Rand des Antriebsabschnittes 2 gebildet ist und der im Ausführungsbeispiel bereichsweise auf einer halbkreisförmigen Linie verläuft. Der Rand verläuft hier auf einem Abschnitt einer Kreisbogenlinie um das Zentrum 5.

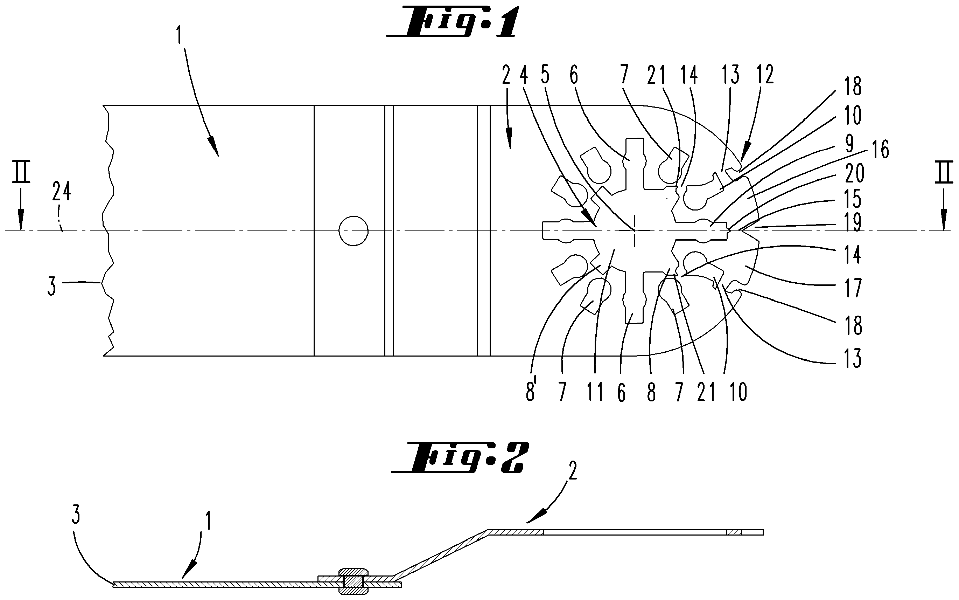

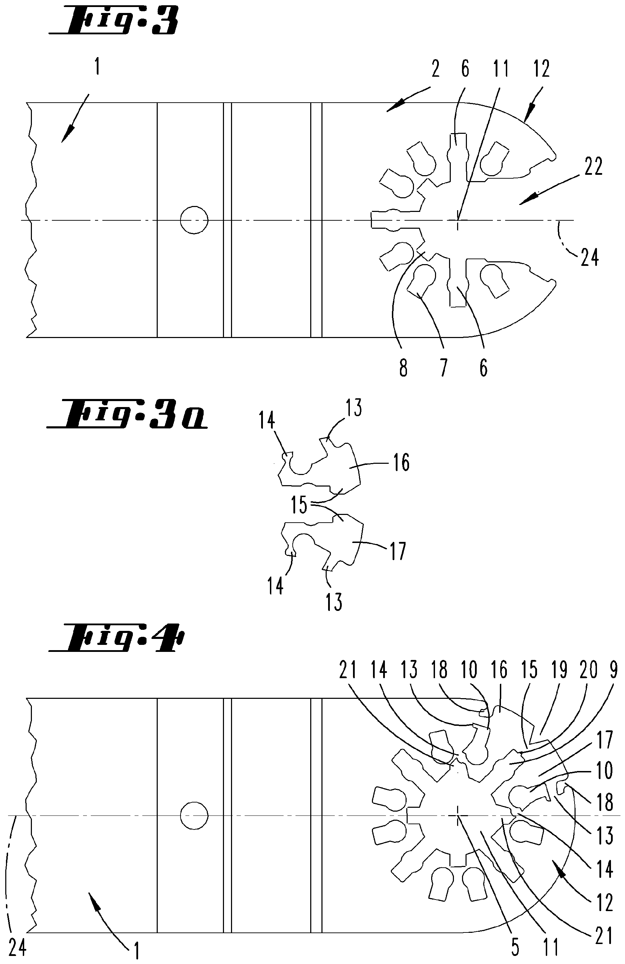

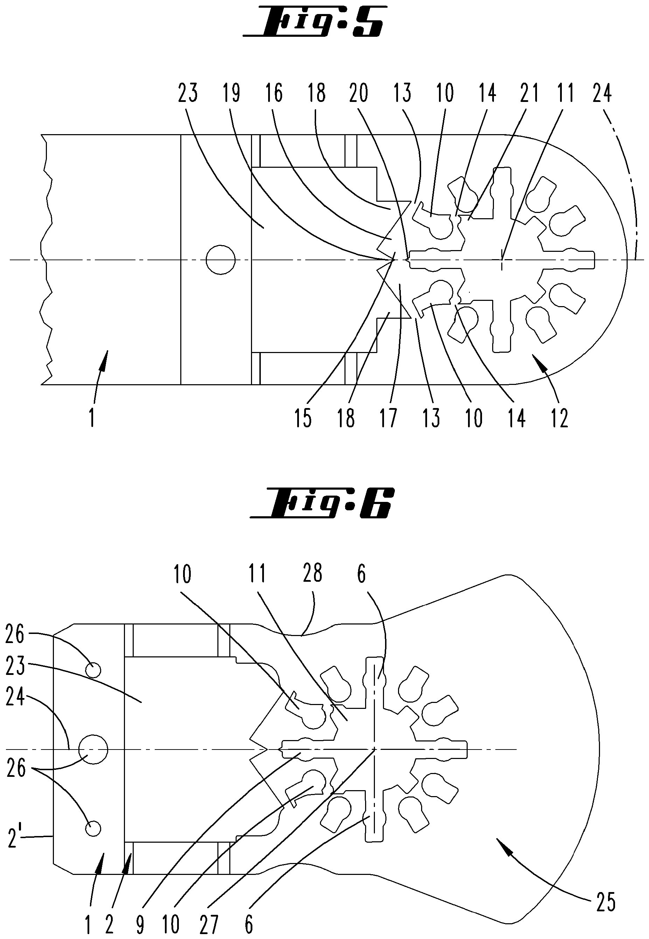

Es ist ein aus zwei Abschnitten 16, 17 bestehender Ausbrechabschnitt vorgesehen. Die beiden Abschnitte 16, 17 des Ausbrechabschnitts sind an einer Solltrennstelle 15 mit einander verbunden. Bei der Solltrennstelle 15 handelt es sich um eine Materialschwächung des Fensterrahmens 12. Bei dem in den Figuren 1 bis 3a dargestellten ersten Ausführungsbeispiel und bei dem in der Figur 5 dargestellten dritten Ausführungsbeispiel verläuft die Solltrennstelle 15 entlang einer Mittellinie 24, die eine durch das Zentrum 5 hindurchgehende Symmetrieachse ausbildet. Bei dem in der Figur 4 dargestellten zweiten Ausführungsbeispiel verläuft die Solltrennstelle 15 ebenfalls auf einer durch das Zentrum 5 hindurchgehende Linie, also auf einer Radialen. Diese Radiale ist aber gegenüber der Symmetrieachse 24 um 45° Winkel versetzt.

Bei der Solltrennstelle 15 besitzt der Rahmen 12 Einschnitte 19, 20. Der Einschnitt 19 erstreckt sich V-förmig von äußeren Rand des Fensters 12 radial einwärts. Der Einschnitt 20 erstreckt sich V-förmig vom radial äußeren Rand einer Formschlusseingriffsöffnung 9 radial auswärts. Die beiden V-Spitzen liegen auf der Linie der Solltrennstelle 15, die von den Einschnitten 19, 20 gebildet ist.

Die beiden spiegelsymmetrisch ausgebildeten Abschnitte 16, 17 des Ausbrechabschnittes sind jeweils an Solltrennstellen 13, 14 mit festen Abschnitten des Rahmens 12 verbunden. Der Ausbrechabschnitt 16, 17 bildet somit einen Teil des Rahmens 12, der sich über einen Umfangsabschnitt von etwa 60° um das Zentrum 5 erstreckt.

Eine Solltrennstelle 13 wird von einem trapezförmigen Steg ausgebildet. Eine nach radial außen weisende Randkante des Stegs wird von einem radial äußeren Einschnitt 18 in den Rahmen 12 gebildet. Eine radial nach innen weisende Randkante des die Solltrennstelle 14 bildenden Stegs wird von einem Rand der Formschlusseingriffsöffnung 10 ausgebildet. Die Bruchlinie der Solltrennstelle 13 verläuft entlang des kurzen Endes des Steges.

Eine zweite Solltrennstelle 14 wird ebenfalls von einem Steg gebildet. Die nach radial außen weisende Randkante des die Solltrennstelle 14 bildenden Stegs wird von einem Randabschnitt der Formschlusseingriffsöffnung 10 ausgebildet. Die Formschlusseingriffsöffnung 10 ist dabei sowohl in radial auswärtiger Richtung hin zur Solltrennstelle 13 als auch in Radialeinwärtsrichtung hin zu dem die Solltrennstelle 14 ausbildenden Steg verbreitert.

Die nach radial innen weisende Randkante des die Solltrennstelle 14 ausbildenden Stegs wird von einem Einschnitt 21 ausgebildet, der die Formschlusseingriffsöffnung 8 in Radialauswärtsrichtung vergrößert.

Der Werkstoff aus dem der Antriebsabschnitt 2 gefertigt ist, ist derart spröde, dass der Rahmen 12 bei Aufbringen eines Biegemomentes an den Solltrennstellen 13 bis 15 bricht. Das Herausbrechen des Ausbrechabschnittes 16, 17 kann schrittweise erfolgen. In einem ersten Schritt können die beiden Abschnitte 16, 17 voneinander getrennt werden. Dies erfolgt durch eine Biegung im Bereich der Solltrennstelle 15. Anschließend werden die dann voneinander getrennten Abschnitte 16, 17 um die Solltrennstellen 13, 14 gebogen, die im Wesentlichen auf einer radialen Linie durch das Zentrum 5 verlaufen. Es entsteht der in den Figuren 3 und 3a dargestellte Zustand, nämlich eine Öffnung 22, deren Öffnungsbreite in etwa dem Durchmesser der minimalen Konturlinie des Fensters 11 entspricht. Da die Trennlinien 13, 14 auf radialen Linien durch das Zentrum 5 verlaufen bildet sich eine V-förmige Öffnung 22 aus, mit der das Werkzeug auf eine Abtriebswelle eine Antriebsmaschine in radial Richtung aufsteckbar ist.

Während bei den in den Figuren 1 bis 4 dargestellten Ausführungsbeispielen die Öffnung 22 zum Außenraum offen ist, also das Fenster 11 mit dem Außenraum verbindet, ist die sich nach Herausbrechen der Ausbrechabschnitte 16, 17 ausbildende Öffnung 22 beim Ausführungsbeispiel der Figur 5 zu einer Aussparung 23 offen. Die Aussparung 23 ist rings umschlossen, besitzt aber eine größere Fläche als die Fläche des Fensters 11. Zu dem befindet sich die Aussparung 23 in einem schräg zu dem das Fenster 11 ausbildenden Abschnitt verlaufenden Abschnitt des Flachstücks. Durch die Aussparung 23 kann ein eine Haltemutter aufweisender Abschnitt einer Abtriebswelle der Antriebsmaschine hindurch gesteckt werden. Mit dieser Haltemutter kann das Antriebsprofil an einem Abtriebsprofil der Antriebsmaschine befestigt werden.

Das in der Figur 6 dargestellte Ausführungsbeispiel entspricht hinsichtlich der Ausgestaltung des Fensters 11 und der Solltrennstellen 13 bis 15 bzw. der Ausbrechabschnitte 16, 17 dem in der Figur 5 dargestellten Ausführungsbeispiel. Wesentlich an dem in der Figur 6 dargestellten Ausführungsbeispiel ist aber die Kompensationsmasse 25.

Eine Mittellinie 24 verläuft quer durch eine Randkante einer Befestigungsstelle 2', an der an dem Antriebsabschnitt 2 ein Arbeitsabschnitt 1 befestigt werden kann, der eine Sägeverzahnung oder dergleichen aufweist. Die Mittellinie 24 verläuft durch den Mittelpunkt des Fensters 11, der durch die Achse 5 definiert ist.

Auf der der Befestigungsstelle 2' gegenüberliegenden Seite des Antriebsabschnittes 2 ist eine Massenansammlung vorgesehen. Es handelt sich um eine Kompensationsmasse 25, die von einer Verbreiterung des Flachstücks in Umfangsrichtung gebildet ist. Die dortige Wandung des Fensters 11 ist zudem auch in Richtung weg von der Befestigungsstelle 2' verbreitert. Dies hat zur Folge, dass der Schwerpunkt 27 des Antriebsabschnitts 2 im Zentrum des Fensters 11 liegt.

Im Bereich zwischen dem Mittelpunkt des Fensters 11 und der Befestigungsstelle 2' können sich Massenfehlstellen befinden. Diese können durch Einbuchtungen 28 in den äußeren Rand des Antriebsabschnittes 2 verwirklicht sein. Bevorzugt werden die Massenfehlstellen aber durch eine rings umgebende Aussparung 23 ausgebildet, durch welche die Mittellinie 24 verläuft.

Wird der Antriebsabschnitt 2 mit einem Arbeitsabschnitt 1 mit Sägeverzahnung verbunden, so erhält das Werkzeug zwar einen Schwerpunkt, der gegenüber der Achse 5 hin zum Arbeitsabschnitt 1 versetzt ist. Die Kompensationsmasse 25 verleiht dem Werkzeug jedoch eine 20- bis 25-prozentige Auswuchtung.

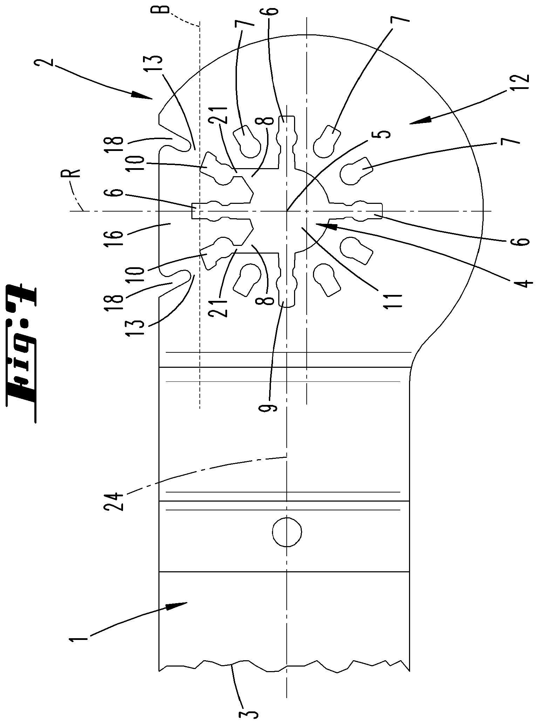

Während bei den zuvor beschriebenen Ausführungsbeispielen mehrere Sollbruchlinien in Radialrichtung verlaufen, ist bei dem in der Figur 7 dargestellten Ausführungsbeispiel vorgesehen, dass die Sollbruchlinie B entlang einer Tangentialen, bezogen auf eine um die Achse 5 gelegte Kreisbogenlinie verläuft, wobei die Achse 5 das Zentrum der auf einer Kreisbogenlinie angeordneten Formschlusseingriffsöffnungen 6 bis 10 bildet.

Es ist insbesondere vorgesehen, dass eine Radiale R, die durch das Oszillationszentrum 5 des Werkzeuges geht, die Sollbruchlinie B in der Mitte des Ausbrechabschnittes 16 rechtwinklig schneidet. Die Sollbruchlinie B verläuft durch zwei Stege 13, die jeweils eine Befestigungsseite des Ausbrechabschnittes 16 mit dem Rahmen 12 des Fensters 11 verbinden. Die beiden Befestigungsseiten verlaufen schrägwinklig zueinander etwa auf V-förmig zueinander stehenden Radialen, von denen die die Sollbruchlinie B schneidende Radiale R eine Winkelhalbierende ist.

An eine Randkante jedes der beiden Stege 13 schließt sich ein Einschnitt 18 an, der nach radial außen, also zur Umfangskonturlinie des Antriebsabschnittes 2 offen ist. An die dieser Randkante gegenüberliegenden Randkante schließt sich ebenfalls ein Einschnitt 21 an, der aber zur freien Fläche des Fensters 11 offen ist. Dieser Einschnitt 21 bildet auch eine Formschlusseingriffsöffnung 10 aus.

Die Sollbruchlinie B bildet eine Biegelinie aus. Die Backen einer Zange können an den voneinander wegweisenden Breitseitenflächen des Ausbrechabschnittes 16 angreifen und den Ausbrechabschnitt 16 um die Biegelinie B hin- und herschwenkend verbiegen, bis eine Materialermüdung in den Stegen 13 deren Bruch verursacht.

**Liste der Bezugszeichen**

| | | | |
|---|---|---|---|
| 1 | Arbeitsabschnitt | 26 | Befestigungsöffnung |
| 2 | Antriebsabschnitt | 27 | Schwerpunkt |
| 2' | Befestigungsstelle | 28 | Einbuchtung |
| 3 | Sägeverzahnung | | |
| 4 | Antriebsprofil | | |
| 5 | Achse, Zentrum | | |
| 6 | Formschlusseingriffsöffnung | | |
| 7 | Formschlusseingriffsöffnung | | |
| 8 | Formschlusseingriffsöffnung | | |
| 8' | Formschlusseingriffsöffnung | | |
| 9 | Formschlusseingriffsöffnung | | |
| 10 | Formschlusseingriffsöffnung | | |
| 11 | Fenster | B | Sollbruchlinie/Biegelinie |
| 12 | Rahmen (Fenster) | R | Radiale |
| 13 | Solltrennstelle, Steg | | |
| 14 | Solltrennstelle | | |
| 15 | Solltrennstelle | | |
| 16 | Ausbrechabschnitt, Teilabschnitt | | |
| 17 | Ausbrechabschnitt, Teilabschnitt | | |
| 18 | Einschnitt | | |
| 19 | Einschnitt | | |
| 20 | Einschnitt | | |
| 21 | Einschnitt | | |
| 22 | Öffnung | | |
| 23 | Aussparung | | |
| 24 | Mittellinie, Symmetrieachse | | |
| 25 | Kompensationsmasse | | |

## Patentansprüche

1. Werkzeug mit einem Arbeitsabschnitt (1) zum Bearbeiten eines Werkstücks und mit einem davon beabstandeten, von einem Flachstück gebildeten Antriebsabschnitt (2), der ein Antriebsprofil (4) zur Kupplung mit einem Abtriebsprofil einer Antriebsmaschine aufweist, mit der das Werkzeug insbesondere um eine Achse (5) oszillierend oder drehend bewegt werden kann, wobei der Antriebsabschnitt (2) ein ringsum geschlossenes Fenster (11) und im Bereich des Rahmens (12) des Fensters (11) Formschlusseingriffsöffnungen (6 bis 10) zum Eingriff von Formschlusseingriffsvorsprüngen des Abtriebsprofils aufweist, **dadurch gekennzeichnet, dass** der Rahmen (12) des Fensters (11) Solltrennstellen (13, 15) aufweist zum Herausbrechen eines Ausbrechabschnitts (16, 17), welche von Stegen gebildet sind, die Randkanten ausbilden, die durch von außen in den Rahmen (12) des Fensters (11) eingebrachte Einschnitte (18, 19) gebildet sind.

2. Werkzeug nach Anspruch 1, **dadurch gekennzeichnet, dass** die Solltrennstellen (13,15) von Stegen gebildet sind, die eine Formschlusseingriffsöffnung (9, 10) begrenzen.

3. Werkzeug nach einem der vorhergehenden Ansprüche, **dadurch gekennzeichnet, dass** der Ausbrechabschnitt zwei an einer Solltrennstelle (15) miteinander verbundene Abschnitte (16,17) aufweist.

4. Werkzeug nach einem der vorhergehenden Ansprüche, **dadurch gekennzeichnet, dass** die Breite einer durch das Heraustrennen des Ausbrechabschnitts (16,17) aus dem Fenster (11) gebildeten Öffnung (22) zu mindestens einen minimalen Durchmesser des Fensters (11) entspricht.

5. Werkzeug nach einem der vorhergehenden Ansprüche, **dadurch gekennzeichnet, dass** die durch das Herausbrechen der Ausbrechabschnitte (16, 17) gebildete Öffnung (22) symmetrisch zu einer Symmetrieachse (24) des Werkzeugs oder des Antriebsabschnitts (2) angeordnet ist.

6. Werkzeug nach einem der vorhergehenden Ansprüche, **dadurch gekennzeichnet, dass** die durch das Herausbrechen des Ausbrechabschnitts (16, 17) gebildete Öffnung (22) seitlich versetzt zu einer Symmetrieachse (24) des Werkzeugs oder des Antriebsabschnitts (2) angeordnet ist.

7. Werkzeug nach einem der vorhergehenden Ansprüche, **dadurch gekennzeichnet, dass** die durch das Herausbrechen der Ausbrechabschnitts (16, 17) gebildete Öffnung (22) das radiale Aufstecken des Werkzeugs auf eine Antriebsachse der Antriebsmaschine erlaubt.

8. Werkzeug nach einem der vorhergehenden Ansprüche, **dadurch gekennzeichnet, dass** die durch das Herausbrechen des Ausbrechabschnitts (16, 17) gebildete Öffnung (22) den Außenraum um das Werkzeug oder eine Aussparung (23) im Antriebsabschnitt (2) mit dem Fenster (11) verbindet.

9. Werkzeug nach einem der vorhergehenden Ansprüche, **dadurch gekennzeichnet, dass** bezogen auf einen durch die Achse (5) definierten Mittelpunkt hindurchgehende Mittellinie (24) die der Befestigungsstelle (2') gegenüberliegende Seite des Antriebsabschnittes eine derartige Massenverteilung aufweist, dass der Schwerpunkt (27) des Antriebsabschnitts (2) im Mittelpunkt oder bezogen auf die Befestigungsstelle (2') jenseits des Mittelpunktes auf der Mittellinie (24) liegt.

10. Werkzeug nach Anspruch 9, **dadurch gekennzeichnet, dass** die der Befestigungsstelle (2') gegenüberliegende Seite des Antriebsabschnittes (2) eine Kompensationsmasse (25) aufweist.

11. Werkzeug nach einem der Ansprüche 9 oder 10, **dadurch gekennzeichnet, dass** die Kompensationsmasse (25) durch eine Verbreiterung des Flachstücks geschaffen ist.

12. Werkzeug nach einem der vorhergehenden Ansprüche, **dadurch gekennzeichnet, dass** der Ausbrechabschnitt (16) lediglich an zwei Befestigungspunkten, die von Stegen (13) gebildet sind, mit dem Rahmen (12) verbunden ist, wobei die Befestigungspunkte eine Biegelinie (B) definieren, die senkrecht zu einer mittig zwischen den Befestigungspunkten und durch die Achse (5) verlaufende Radiale (R) verläuft.

13. Werkzeug nach einem der vorhergehenden Ansprüche, **dadurch gekennzeichnet, dass** jede der zwei voneinander wegweisenden Befestigungsseiten des Ausbrechabschnittes (16) mit nur einem die Solltrennstelle bildenden Steg (13) mit dem Rahmen (12) verbunden ist, wobei jeder Steg (13) an einen zum Außenrand des Rahmens (12) freien radial äußeren Einschnitt (18) und an einen zum Fenster (11) freien Einschnitt (10, 21) angrenzt.

## Claims

1. Tool comprising a work portion (1) for machining a workpiece and comprising a drive portion (2) which is spaced therefrom, is formed by a flat piece and has a drive profile (4) for coupling to an output profile of a prime mover, by means of which the tool can be moved in particular about an axis (5) in an oscillating or rotating manner, the drive portion (2) having a window (11) that is closed all around and having, in the region of the frame (12) of the window (11), form-fitting engagement openings (6 to 10) for engagement of form-fitting engagement projections of the output profile, **characterised in that** the frame (12) of the window (11) has predetermined separation points (13, 15) for breaking out a break-out portion (16, 17), which predetermined separation points are formed by webs which form outer edges that are formed by incisions (18, 19) introduced into the frame (12) of the window (11) from the outside.

2. Tool according to claim 1, **characterised in that** the predetermined separation points (13, 15) are formed by webs which delimit a form-fitting engagement opening (9, 10).

3. Tool according to either of the preceding claims, **characterised in that** the break-out portion has two portions (16, 17) connected to one another at a predetermined separation point (15).

4. Tool according to any of the preceding claims, **characterised in that** the width of an opening (22) formed by removing the break-out portion (16, 17) from the window (11) corresponds to at least a minimum diameter of the window (11).

5. Tool according to any of the preceding claims, **characterised in that** the opening (22) formed by breaking out the break-out portions (16, 17) is arranged symmetrically to an axis of symmetry (24) of the tool or of the drive portion (2).

6. Tool according to any of the preceding claims, **characterised in that** the opening (22) formed by breaking out the break-out portion (16, 17) is arranged so as to be laterally offset in relation to an axis of symmetry (24) of the tool or of the drive portion (2).

7. Tool according to any of the preceding claims, **characterised in that** the opening (22) formed by breaking out the break-out portion (16, 17) allows the tool to be inserted radially onto a drive shaft of the prime mover.

8. Tool according to any of the preceding claims, **characterised in that** the opening (22) formed by breaking out the break-out portion (16, 17) connects the outer space around the tool or a recess (23) in the drive portion (2) to the window (11).

9. Tool according to any of the preceding claims, **characterised in that**, relative to a centre line (24) passing through a centre point defined by the axis (5), the side of the drive portion opposite the fastening point (2') has such a mass distribution that the centre of gravity (27) of the drive portion (2) is in the centre point or beyond the centre point on the centre line (24) relative to the fastening point (2').

10. Tool according to claim 9, **characterised in that** the side of the drive portion (2) opposite the fastening point (2') has a compensation mass (25).

11. Tool according to either claim 9 or claim 10, **characterised in that** the compensation mass (25) is provided by widening the flat piece.

12. Tool according to any of the preceding claims, **characterised in that** the break-out portion (16) is connected to the frame (12) only at two fastening points which are formed by webs (13), the fastening points defining a bending line (B) which extends perpendicular to a radial (R) that extends centrally between the fastening points and through the axis (5).

13. Tool according to any of the preceding claims, **characterised in that** each of the two mutually facing fastening sides of the break-out portion (16) is connected to the frame (12) by means of only one web (13) forming the predetermined separation point, each web (13) being adjacent to a free radially outer incision (18) relative to the outer edge of the frame (12) and a free incision (10, 21) relative to the window (11).

## Revendications

1. Outil avec une partie de travail (1) pour l'usinage ou le traitement d'une pièce et avec une partie d'entraînement (2) espacée de celle-ci, qui est formée par un élément plat et présente un profil d'entraînement (4) pour l'accouplement à un profil de sortie d'une machine d'entraînement et avec laquelle l'outil peut être déplacé de manière oscillante ou rotative, en particulier autour d'un axe (5), dans lequel la partie d'entraînement (2) présente une fenêtre (11) fermée sur tout le pourtour et, dans la zone du cadre (12) de la fenêtre (11), des ouvertures d'engagement positif (6 à 10) pour l'engagement de saillies d'engagement positif du profil de sortie, caractérisé en ce en ce que le cadre (12) de la fenêtre (11) présente des zones de séparation prédéfinies (13, 15) pour détacher par rupture une partie détachable par rupture (16, 17) lesquelles sont formées par des nervures qui forment des bords formés par des encoches (18, 19) pratiquées dans le cadre (12) de la fenêtre (11) depuis l'extérieur.

2. Outil selon la revendication 1, **caractérisé en ce que** lesdits zones de séparation prédéfinies (13, 15) sont formées par des nervures délimitant une ouverture d'engagement positif (9, 10).

3. Outil selon l'une des revendications précédentes, **caractérisé en ce que** la partie détachable par rupture comprend deux parties (16, 17) reliées entre elles au niveau d'une zone de séparation prédéfinie (15).

4. Outil selon l'une des revendications précédentes, **caractérisé en ce que** la largeur d'une ouverture (22) formée en détachant par rupture la partie détachable par rupture (16, 17) de la fenêtre (11) correspond au moins à un diamètre minimum de la fenêtre (11).

5. Outil selon l'une des revendications précédentes, **caractérisé en ce que** l'ouverture (22) formée en détachant par rupture les parties détachables par rupture (16, 17) est agencée symétriquement par rapport à un axe de symétrie (24) de l'outil ou de la partie d'entraînement (2).

6. Outil selon l'une des revendications précédentes, **caractérisé en ce que** l'ouverture (22) formée en détachant par rupture la partie détachable par rupture (16, 17) est agencée latéralement décalée par rapport à un axe de symétrie (24) de l'outil ou de la partie d'entraînement (2).

7. Outil selon l'une des revendications précédentes, **caractérisé en ce que** l'ouverture (22) formée en détachant par rupture la partie détachable par rupture (16, 17) permet le montage radial de l'outil sur un axe d'entraînement de la machine d'entraînement.

8. Outil selon l'une des revendications précédentes, **caractérisé en ce que** l'ouverture (22) formée en détachant par rupture la partie détachable par rupture (16, 17) relie l'espace extérieur autour de l'outil ou un évidement (23) dans la partie d'entraînement (2) à la fenêtre (11).

9. Outil selon l'une des revendications précédentes, **caractérisé en ce que**, par rapport à une ligne médiane (24) passant par un point central défini par l'axe (5), le côté de la partie d'entraînement opposé à la zone de fixation (2') présente une répartition des masses telle que le centre de gravité (27) de la partie d'entraînement (2) se trouve au point central ou, par rapport à la zone de fixation (2'), au-delà du point central sur la ligne médiane (24).

10. Outil selon la revendication 9, **caractérisé en ce que** le côté de la partie d'entraînement (2) opposé à la zone de fixation (2') comprend une masse de compensation (25).

11. Outil selon l'une des revendications 9 ou 10, **caractérisé en ce que** la masse de compensation (25) est constituée par l'élargissement de l'élément plat.

12. Outil selon l'une quelconque des revendications précédentes, **caractérisé en ce que** la partie détachable par rupture (16) est reliée au cadre (12) uniquement en deux points de fixation qui sont formés par des nervures (13), dans lequel les points de fixation définissent une ligne de pliage (B) s'étendant perpendiculairement à une radiale (R) passant centralement entre les points de fixation et par l'axe (5).

13. Outil selon l'une des revendications précédentes, **caractérisé en ce que** chacun des deux côtés de fixation opposés de la partie détachable par rupture (16) est relié au cadre (12) par une seule nervure (13) qui forme la zone de séparation prédéfinie, dans lequel chaque nervure (13) est attenante à une encoche (18) radialement extérieure qui est libre vers le bord extérieur du cadre (12) et à une encoche (10, 21) libre vers la fenêtre (11).
